# EUROPÄISCHE PATENTANMELDUNG

(11) **EP 1 111 423 A2**
(43) Veröffentlichungstag der Anmeldung: **27.06.2001**
(21) Anmeldenummer: 00126000.9
(22) Anmeldetag: 28.11.2000
(51) Int. Cl.: G02B 6/44

(54) **Verfahren sowie Einrichtung zur Herstellung eines optischen Übertragungselements**

(30) Priorität: 20.12.1999 DE 19961486
(71) Anmelder: SCC Special Communication Cables GmbH & Co. KG, 81379 München (DE)
(72) Erfinder: Schneider, Reiner, 96237 Ebersdorf (DE)
(74) Vertreter: Fischer, Volker, Dipl.-Ing.

(57) **Zusammenfassung**

Zur Herstellung eines optischen Übertragungselements (BL) werden Lichtwellenleiter (LW1 mit LWn) auf ihrem Laufweg von ihren Vorratsspulen (VS1 mit VSn) zu einer gemeinsamen Abzugseinrichtung (GZA) hinsichtlich ihrer Zugspannungen (F1 mit Fn) selektiv voreingestellt. Anschließend wird den Lichtwellenleitern (LW1 mit LWn) mit Hilfe der gemeinsamen Abzugseinrichtung (GAZ) im wesentlichen dieselbe Vorwärtstransportgeschwindigkeit (V1 = V2 =....= Vn) zugeordnet und in eine nachfolgende, gemeinsame Beschichtungsvorrichtung (BV) eingeschoben, die die Lichtwellenleiter (LW1 mit LWn) mit einer gemeinsamen Umhüllung (BS) aus Kunststoffmaterial umschließt.

## Beschreibung

Die Erfindung betrifft ein Verfahren zur Herstellung eines optischen Übertragungselements, bei dem mehrere Lichtwellenleiter von Vorratsspulen abgezogen und über eine nachfolgende, gemeinsame Abzugseinrichtung einer gemeinsamen Beschichtungsvorrichtung zugeführt werden, von der sie mit einer gemeinsamen Umhüllung aus Kunststoffmaterial umschlossen werden.

Aus der EP 0 582 944 A1 ist ein Verfahren bekannt, bei dem mehrere Lichtwellenleiter nebeneinander durch eine sie umschließende Beschichtungseinrichtung hindurchgeführt werden. Die Lichtwellenleiter werden sowohl vor als auch in der Beschichtungseinrichtung freilaufend derart geführt, dass sie im wesentlichen nur mit dem Beschichtungsmaterial in Berührung kommen. Durch die Längsbewegung der Lichtwellenleiter wird eine geschleppte Strömung des Beschichtungsmaterials erzeugt, die zu einer Selbstzentrierung der Lichtwellenleiter beiträgt. Zur Vergleichmäßigung des Einlaufs der Lichtwellenleiter in die Beschichtungseinrichtung werden diese vorher über eine Abzugsrolle geführt. Infolge der Ausprägung einer Schleppströmung kann es jedoch bei den Lichtwellenleitern zu einer unterschiedlichen Beaufschlagung mit Längs-Zugspannungen kommen, was vermutlich darauf zurückzuführen ist, dass die Schleppströmung die einzelnen Lichtwellenleiter nicht mit der jeweils gleichen Vorwärtsbewegung beaufschlagt.

Aus der DE 195 06 008 A1 ist ein weiteres Verfahren zur Herstellung eines optischen Übertragungselements bekannt, wofür mehrere Lichtwellenleiter von Vorratsspulen abgezogen und über eine Umlenkrolle einer Beschichtungseinrichtung zugeführt werden. Mit deren Hilfe werden die Lichtwellenleiter mit einer gemeinsamen Umhüllung aus Kunststoffmaterial umschlossen. Nach oder bei der Umlenkrolle und vor der gemeinsamen Beschichtungseinrichtung sind Einstellmittel vorgesehen, durch die dem jeweiligen Lichtwellenleiter eine selektiv einstellbare Vorspannung oder Länge aufgeprägt wird.

In der Praxis kann die Dosierung dieser Vorspannungen erschwert sein. So können beispielsweise trotz der Voreinstellung der Längs-Zugspannungen der Lichtwellenleiter Zusatzkräfte in der nachfolgenden Beschichtungseinrichtung in unkontrollierbarer Weise auf die einzelnen Lichtwellenleiter einwirken. Dies gilt insbesondere dann, wenn solche zusätzlichen Einflussgrößen durch nachfolgende Bearbeitungsprozesse zeitlich variieren, d.h. zeitvariant sind. Eine Vorabberücksichtigung solcher nachfolgender Faktoren kann dann durch entsprechende Voreinstellung der Längszugspannungen der einzelnen Lichtwellenleiter nur schwierig oder überhaupt nicht ausgeglichen werden. Trotz der Voreinstellung der Längszugspannungen der einzelnen Lichtwellenleiter kann es somit durch nachfolgende Weiterverarbeitungsprozesse zu unerwünschten, unkontrollierbaren Veränderungen dieser voreingestellten Längszugspannungen durch etwaig auftretende Zusatzkräfte kommen. Darüberhinaus ist der Einzelabgleich der selektiven Einstellmittel relativ zueinander aufwendig und bedarf in der Praxis bei sich verändernden Produktionsbedingungen nachfolgender Herstellungsschritte einer ständigen Nachregulierung. Zusammenfassend betrachtet können also bei diesem bekannten Verfahren die Lichtwellenleiter trotz der getroffenen Voreinstellungen mit einer undefinierten Spannungsverteilung in der fertigen Lichtwellenleiter-Bandleitung zu liegen kommen.

Der Erfindung liegt die Aufgabe zugrunde, einen Weg aufzuzeigen, wie mehrere Lichtwellenleiter in ihre gemeinsame Umhüllung aus Kunststoffmaterial hinsichtlich ihrer Längs-Zugspannungen in zuverlässiger und präzise kontrollierbarer Weise eingebracht werden können. Diese Aufgabe wird bei einem Verfahren der eingangs genannten Art dadurch gelöst, dass lediglich vor der gemeinsamen Abzugseinrichtung eine selektive Voreinstellung der Zugspannung jedes Lichtwellenleiters vorgenommen wird, dass anschließend mit Hilfe der gemeinsamen Abzugseinrichtung diesen selektiv voreingestellten Lichtwellenleitern im wesentlichen dieselbe Vorwärtstransportgeschwindigkeit zugeordnet wird, und dass die Lichtwellenleiter mit dieser selben Vorwärtstransportgeschwindigkeit der gemeinsamen Beschichtungsvorrichtung zugeführt werden.

Dadurch, dass die Lichtwellenleiter in einem definiert gedehnten Zustand einer gemeinsamen Abzugseinrichtung zugeführt werden, die alle Lichtwellenleiter mit etwa der gleichen Vorwärtstransportgeschwindigkeit in die nachfolgende Beschichtungseinrichtung hineinfördert, werden etwaig wirksam werdende Zusatzkräfte in der nachfolgenden Beschichtungsvorrichtung stets automatisch ausgeglichen. Werden beispielsweise bei Anwendung einer Schleppströmung im Bereich der Beschichtungsvorrichtung zur Herstellung einer Lichtwellenleiter-Bandleitung auf deren äußere Randfasern größere Reibungskräfte als auf deren innenliegende Lichtwellenleiter ausgeübt, so werden die äußeren Randfasern stärker als die innenliegenden Lichtwellenleiter gedehnt. Da die äußeren Lichtwellenleiter mit derselben Geschwindigkeit wie die innenliegenden Lichtwellenleiter in die Beschichtungsvorrichtung von der gemeinsamen Abzugseinrichtung eingeführt werden, werden diese, durch die Beschichtungsvorrichtung zusätzlich auf die Randfasern aufgeprägten Zugspannungskräfte weitgehend kompensiert, da ja durch die zusätzliche Dehnung der Randfasern entsprechend mehr Länge durch die gemeinsame Abzugseinrichtung in die Beschichtungsvorrichtung hineingefördert wird. Da durch die gemeinsame Abzugseinrichtung alle Lichtwellenleiter mit ihrem voraufgeprägten Spannungszustand mit etwa derselben Vorwärtstransportgeschwindigkeit in die nachfolgende Beschichtungseinrichtung hineingeschoben werden, bleiben diese ursprünglich vorgegebenen Spannungsverhältnisse der Lichtwellenleiter relativ zueinander weitgehend erhalten. Die einmal voreingestellten Zugspannungsverhältnisse der Lichtwellenleiter auf ihrem Laufweg von ihren Vorratsspulen zur gemeinsamen Abzugseinrichtung bleiben somit von etwaigen Zusatzkräften in der gemeinsamen Abzugseinrichtung nachfolgenden Folgeprozessen weitgehend unbeeinflusst.

Die Erfindung betrifft weiterhin eine Einrichtung zur Durchführung des Verfahrens nach einem der vorhergehenden Ansprüche, welches dadurch gekennzeichnet ist, dass lediglich vor der gemeinsamen Abzugseinrichtung getrennte Einstellmittel vorgesehen sind, mit deren Hilfe die Zugspannungen der Lichtwellenleiter selektiv einstellbar sind, bevor diese in die gemeinsame Abzugseinrichtung einlaufen, und dass die gemeinsame Abzugseinrichtung derart ausgebildet ist, dass die selektiv voreingestellten Lichtwellenleiter im wesentlichen mit derselben Vorwärtstransportgeschwindigkeit der nachfolgenden, gemeinsamen Beschichtungsvorrichtung zuführbar sind.

Sonstige Weiterbildungen der Erfindung sind in den Unteransprüchen wiedergegeben.

Die Erfindung und ihre Weiterbildungen werden nachfolgend anhand von Zeichnungen näher erläutert.
Es zeigen:
- Figur 1: in schematischer Übersichtsdarstellung eine Einrichtung zur Durchführung des erfindungsgemäßen Herstellungsverfahrens für ein erstes optisches Übertragungselement, und
- Figur 2: schematisch im Querschnitt ein zweites optisches Übertragungselement, das ebenfalls mit den Komponenten der Einrichtung nach Figur 1 hergestellt werden kann.

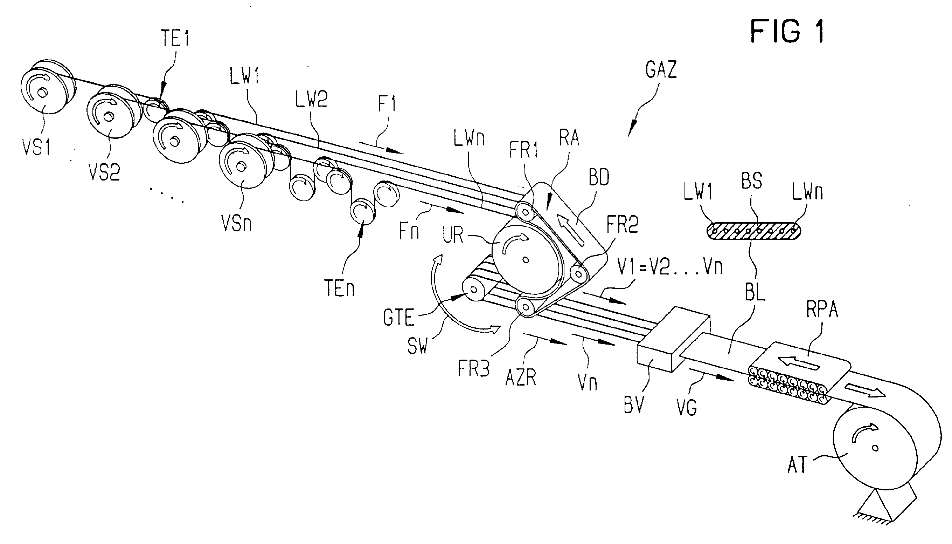

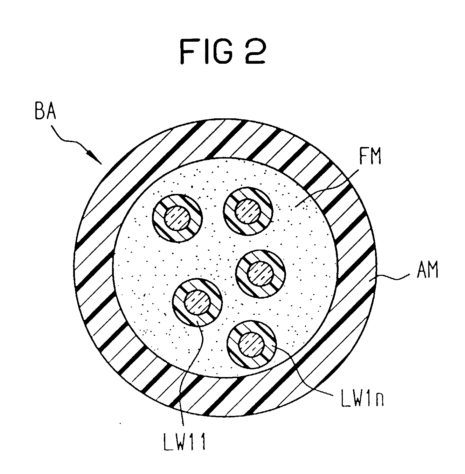

Elemente mit gleicher Funktion und Wirkungsweise sind in den Figuren 1 und 2 jeweils mit denselben Bezugszeichen versehen.

Die Figur 1 zeigt in schematischer Darstellung den Ablauf des Fertigungsprozesses für die Herstellung eines langgestreckten, optischen Übertragungselements in Form von einer Bandleitung BL. Derartige Bandleitungen enthalten eine vorgebbare Anzahl von nebeneinander liegenden Lichtwellenleitern, meist vier, acht oder zwölf, die von einer gemeinsamen, sie fest umschließenden Umhüllung aus Kunststoffmaterial, insbesondere UV-vernetzbarem Acrylat, umgeben werden. Diese Bandleitung BL ist am Ausgang der Herstellungslinie von Figur 1 zusätzlich im Querschnitt gezeichnet. Die Bandleitung BL von Figur 1 weist im fertigen Zustand mehrere Lichtwellenleiter LW1 mit LWn auf, die fest in einer ein- oder mehrlagigen Kunststoffhülle BS eingebettet sind. Dabei liegen die Lichtwellenleiter LW1 mit LWn vorzugsweise in einer gemeinsamen Ebene weitgehend parallel nebeneinander. Sie sind dort im wesentlichen in äquidistanten Querabständen voneinander angeordnet. Die Bandleitung BL weist insgesamt betrachtet eine im wesentlichen flach rechteckförmige Querschnittsform auf. Die gemeinsame Kunststoff-Umhüllung BS umgibt dabei die Struktur von Lichtwellenleitern LW1 mit LWn als Bedeckungsschicht. In diese sind die Lichtwellenleiter LW1 mit LWn derart eingelagert, daß sie sich im geradlinig ausgelegten, ungespannten Zustand der Bandleitung ebenfalls im wesentlichen geradlinig erstrecken. Die beiden außen liegenden Lichtwellenleiter LW1, LWn in der fertigen Bandleitung BL begrenzen dabei die Ränder der gemeinsamen, planen Lageebene der Gruppe von Lichtwellenleitern LW1 mit LWn, d.h. zwischen den beiden äußeren Lichtwellenleitern LW1, LWn sind die Lichtwellenleiter LW2 mit LWn-1 innenliegend in der Bändchenstruktur positioniert.

In der Figur 1 werden die Lichtwellenleiter LW1 mit LWn zur Herstellung der Bandleitung BL von separat zugeordneten Vorratsspulen VS1 mit VSn unter Zuhilfenahme einer nachgeordneten, gemeinsamen Abzugseinrichtung GAZ abgezogen. Dabei sind die Vorratsspulen VS1 mit VSn lateral mit etwa demselben Querabstand zueinander versetzt angeordnet, um die Lichtwellenleiter LW1 mit LWn ausgehend von ihren Vorratsspulen VS1 mit VSn möglichst parallel nebeneinander sowie im wesentlichen mit äquidistanten Querabständen voneinander in einer gemeinsamen Lageebene im wesentlichen geradlinig in Richtung auf die gemeinsame Abzugseinrichtung GAZ zuführen zu können.

Die gemeinsame Abzugseinrichtung GAZ ist durch eine gemeinsame Umlenkrolle UR gebildet, der ein Raupenabzug RA zugeordnet ist. Die Umlenkrolle UR ist dabei im wesentlichen kreiszylinderförmig ausgebildet. Die Lichtwellenleiter LW1 mit LWn werden in einer Reihe nebeneinanderliegend mit im wesentlichen äquidistanten Querabständen voneinander der Umlenkrolle UR zugeführt. Sie liegen zumindest entlang einem Teil des Außenumfangs der Umlenkrolle UR an. Die Umlenkrolle ist vorzugsweise frei drehbar aufgehängt. Gegebenenfalls kann ihr auch ein eigenener Antrieb zugeordnet sein. Um sicherzustellen, dass es zu keinem Schlupf der aufliegenden Lichtwellenleiter LW1 mit LWn (insbesondere bei Umschlingungswinkeln < 180 °) kommt, wird zusätzlich der Raupenabzug RA eingesetzt. Dieser weist ein Endlosband BD auf, dass über drei Führungsrollen FR1 mit FR3 läuft, und dessen Innenteil durch diese Führungsrollen fest gegen die Oberfläche der Umlenkrolle UR und damit gegen die dort aufliegenden Lichtwellenleiter LW1 mit LWn gepresst wird. Im allgemeinen sind derartige Andruckraupen RA so ausgestaltet, dass die mittlere Führungsrolle FR2 raumortsfest angeordnet ist, während die äußeren Führungsrollen FR1 und FR3 über entsprechende Führungsarme schwenkbar mit der zentralen Führungsrolle FR2 verbunden sind. Diese Führungsarme sind hier in der Figur 1 der zeichnerischen Einfachheit halber weggelassen worden. Auf diese Weise ist dann auch das Aufliegen der Lichtwellenleiter LW1 mit LWn auf die Umlenkrolle UR erleichtert.

Auf diese Weise ist es mit Hilfe der gemeinsamen Abzugseinrichtung GAZ ermöglicht, die Lichtwellenleiter LW1 mit LWn als Gruppe gemeinsam gleichmäßig mit etwa derselben Vorwärtstransportgeschwindigkeit vorwärts zu fördern. Jedem Lichtwellenleiter LW1 mit LWn lässt sich somit im wesentlichen dieselbe Vorwärtstransportgeschwindigkeit V1 = V2 = .....=Vn in definierter Weise zuordnen.

Entlang dem im wesentlichen sich geradlinig erstreckenden Laufweg der Lichtwellenleiter LW1 mit LWn von ihren Vorratsspulen VS1, VSn zu dieser gemeinsamen Abzugseinrichtung GAZ sind in der Figur 1 Einstellmittel TE1 mit TEn vorgesehen, die jedem Lichtwellenleiter LW1 mit LWn separat, d.h. getrennt zugeordnet sind. Mit Hilfe dieser Einstellmittel TE1 mit TEn ist es ermöglicht, die Längs-Zugspannungen der Lichtwellenleiter LW1 mit LWn selektiv einzustellen, bevor diese in die gemeinsame Abzugseinrichtung GAZ einlaufen. Als jeweiliges selektives Einstellmittel TE1 mit TEn kann vorzugsweise ein Tänzer-System bekannter Bauart vorgesehen sein. Ein solches Tänzer-System ist in der Figur 1 jeweils durch drei hintereinander angeordnete Umlenkrollen gebildet, von denen die mittlere Umlenkrolle gegenüber den äußeren beiden Umlenkrollen in ihrer Position veränderbar ist. Durch diese Möglichkeit der Laufwegveränderung für den jeweiligen Lichtwellenleiter kann dann in spezifischer Weise dessen Zugspannung individuell eingestellt werden. Jeder der Lichtwellenleiter LW1 mit LWn kann somit mit einer spezifischen Vorspannung Fl mit Fn beaufschlagt werden. Die den Lichtwellenleitern LW1 mit LWn spezifisch zugeordneten Vorspannungen sind in der Figur 1 durch Pfeile F1 mit Fn gekennzeichnet. Als Einstellmittel können selbstverständlich auch sonstige Vorrichtungen verwendet werden, mit denen sich die Längs-Zugspannung des jeweiligen Lichtwellenleiters individuell beeinflussen lässt. So kann beispielsweise auch anstelle der jeweiligen Tänzer-Einrichtung eine bremsende Umlenkrolle der jeweiligen Vorratsspule nachgeordnet sein. Je stärker deren Bremswirkung ist, desto größer wird die im zugeordneten Lichtwellenleiter hervorgerufene, voreinstellbare Längs-Zugspannung.

Zur Herstellung der Bandleitung BL werden die Längs-Zugspannungen F1 mit Fn der Lichtwellenleiter LW1 mit LWn relativ zueinander auf ihrem Laufweg von ihren Vorratsspulen VS1 mit VSn zur gemeinsamen Abzugseinrichtung GAZ zweckmäßigerweise derart voreingestellt, dass sich eine Zugspannungsverteilung ergibt, die weitgehend einer gewünschten, relativen Zugspannungsverteilung im fertigen optischen Übertragungselement entspricht. Damit alle Lichtwellenleiter im fertigen Lichtwellenleiterbändchen in etwa dieselben Übertragungseigenschaften, insbesondere dieselbe Dämpfung aufweisen, ist es insbesondere zweckmäßig, dass alle Lichtwellenleiter im Beschichtungsmaterial BS der fertigen Bandleitung BL mit etwa derselben Längs-Zugspannung zuliegen kommen. Deshalb werden im vorliegenden Ausführungsbeispiel von Figur 1 alle Lichtwellenleiter LW1 mit LWn mittels der individuell zugeordneten Einstellmittel TE1 mit TEn hinsichtlich ihrer Längs-Zugspannungen derart voreingestellt, dass alle Lichtwellenleiter LW1 mit LWn im wesentlichen die gleiche Längs-Zugspannung F1 = F2 = ...=Fn aufweisen.

Mit diesen definiert voreingestellten Längszugspannungen F1 mit Fn der Lichtwellenleiter LW1 mit LWn werden diese als Gruppe von der nachfolgenden, gemeinsamen Abzugseinrichtung GAZ mit etwa derselben Vorwärtstransportgeschwindigkeit V1 = V2 = ....Vn vorwärtstransportiert und in eine nachgeordnete Beschichtungsvorrichtung BV hineingefördert. Die Gruppe von Lichtwellenleitern LW1 mit LWn wird dabei nach Verlassen der gemeinsamen Abzugseinrichtung GAZ über eine gemeinsame, weitere kreiszylinderförmige Umlenkrolle GTE geführt, die vorzugsweise tänzerartig schwenkbar ausgebildet ist. In der Figur 1 ist dabei diese tänzerartige Umlenkrolle GTE der zeichnerischen Einfachheit halber lediglich schematisch als kreizylinderförmige Rolle dargestellt. Ihre Schwenkbarkeit in und entgegen der Transportrichtung der Lichtwellenleiter ist durch einen Doppelpfeil SW gekennzeichnet. Durch diese Schwenkbarkeit der Umlenkrolle GTE ist ein Wegausgleich der Lichtwellenleiter auf ihrem Laufweg von der gemeinsamen Abzugsrichtung GAZ in die nachfolgende Beschichtungsvorrichtung BV hinein weitgehend sichergestellt, falls etwaige zusätzliche Zugspannungskräfte durch den Beschichtungsvorgang in der nachfolgenden Beschichtungsvorrichtung BV oder durch etwaig nachfolgende, weitere Verarbeitungsprozesse auf die Lichtwellenleiter LW1 mit LWn einwirken.

Ggf. kann diese tänzerartige, gemeinsame Umlenkrolle GTE, die der gemeinsamen Abzugeinrichtung GAZ nachfolgt, auch weggelassen werden.

Die Lichtwellenleiter LW1 mit LWn werden von der gemeinsamen Abzugseinrichtung GAZ kommend über dessen nachgeordnete Tänzerrolle GTE im wesentlichen geradlinig der Beschichtungsvorrichtung BV zugeführt. Die Lichtwellenleiter LW1 mit LWn sind dabei bereits in eine derartige räumliche Konfiguration bzw. Struktur gebracht, wie diese später in der fertigen Bandleitung BL gewünscht ist. Dabei ist in der Figur 1 die Abzugsrichtung der Lichtwellenleiter LW1 mit LWn von der gemeinsamen Abzugseinrichtung GAZ kommend in die Beschichtungsvorrichtung BV hinein mit einem Pfeil AZR veranschaulicht.

Die Lichtwellenleiter LW1 mit LWn werden in der Beschichtungsvorrichtung BV ringsum mit der gemeinsamen Bändchenhülle BS umgeben. In diese sind sie fest eingelagert.

Die fertige, ausgehärtete Bandleitung BL wird schließlich im wesentlichen geradlinig einer nachgeordneten, weiteren Abzugseinrichtung RPA zugeführt. Diese kann vorzugsweise als Raupenbandabzug ausgebildet sein, der die fertige Bandleitung BL auf seiner Ober- und Unterseite weitgehend schlupffrei erfasst und in Abzugsrichtung VG vorwärtstransportiert. Die fertige Bandleitung BL wird schließlich auf einer Vorratstrommel AT aufgewickelt und dort gespeichert.

Die der Beschichtungsvorrichtung BV nachgeordnete Abzugseinrichtung RPA fördert die fertige Bandleitung BL vorzugsweise mit etwa derselben Vorwärtstransportgeschwindigkeit VG vorwärts, wie die Lichtwellenleiter LW1 mit LWn durch die gemeinsame Abzugseinrichtung GAZ in die Beschichtungsvorrichtung BV hineingeschoben werden. Dadurch wird weitgehend sichergestellt, dass die den Lichtwellenleitern LW1 mit LWn ursprünglich aufgeprägten, relativen Längszugspannungsverhältnisse auch in der fertigen Bandleitung BL weitgehend konserviert bleiben.

Dadurch, dass die Lichtwellenleiter LW1 mit LWn in einem definiert vorgedehnten Zustand der gemeinsamen Abzugseinrichtung GAZ zugeführt werden, und diese gemeinsame Abzugseinrichtung GAZ alle Lichtwellenleiter LW1 mit LWn mit etwa derselben Vorwärtstransportgeschwindigkeit V1 = V2 = ...Vn in die nachfolgende Beschichtungseinrichtung BV hinein fördert, werden etwaig wirksam werdende Zusatzkräfte in der nachfolgenden Beschichtungsvorrichtung sowie gegebenenfalls in nachfolgenden Weiterverarbeitungseinheiten stets automatisch ausgeglichen. Werden beispielsweise bei Anwendung einer Schleppströmung im Bereich der Beschichtungsvorrichtung BV von Figur 1 zur Herstellung des Lichtwellenleiter-Bändchens BL auf deren äußere Randfasern größere Reibungskräfte als auf deren innenliegende Lichtwellenleiter ausgeübt, so werden die äußeren Randfasern LW1, LWn stärker als die innenliegenden Lichtwellenleiter gedehnt. Da die äußeren Lichtwellenleiter jedoch mit derselben Geschwindigkeit wie die innenliegenden Lichtwellenleiter in die Beschichtungsvorrichtung BV von der gemeinsamen Abzugseinrichtung GAZ hineingeführt bzw. hineingeschoben werden, werden die durch die Beschichtungsvorrichtung BV zusätzlich auf die äußeren Lichtwellenleiter LW1, LWn aufgebrachten Zugspannungskräfte weitgehend kompensiert. Denn durch die zusätzliche Dehnung der Randfasern LW1, LWn wird ja aufgrund der Konstanz, mit der die gemeinsame Abzugseinrichtung GAZ die Lichtwellenleiter in die Beschichtungsvorrichtung BV hineinfördert, entsprechend mehr Länge der äußeren Lichtwellenleiter in die Beschichtungsvorrichtung hineingeschoben, so dass eine automatische Zugspannungskorrektur stattfindet. Da durch die gemeinsame Abzugseinrichtung alle Lichtwellenleiter mit ihrem voraufgeprägtem Spannungszustand mit etwa derselben Vorwärtstransportgeschwindigkeit in die nachfolgende Beschichtungseinrichtung hineingeschoben werden, bleibt diese ursprünglich vorgegebene, relative Spannungsverteilung der Lichtwellenleiter auch für das fertige Lichtwellenleiter-Bändchen weitgehend erhalten. Die einmal voreingestellten Zugspannungsverhältnisse der Lichtwellenleiter auf ihrem Laufweg zu ihren Vorratsspulen zur gemeinsamen Abzugseinrichtung bleiben somit von etwaigen Zusatzkräften, die von der gemeinsamen Abzugseinrichtung nachfolgenden Weiterverarbeitungseinheiten herrühren könnten, weitgehend unbeeinflusst. Mit "Erhalt der voreingestellten Zugspannungsverhältnisse" der Lichtwellenleiter ist dabei im Rahmen der Erfindung gemeint, daß die ursprünglich vorgegebenen, relativen Spannungsunterschiede wie z.B. F1/F2 zwischen je zwei benachbarten Lichtwellenleitern wie z.B. LW1/LW2 sich auch in der fertig hergestellten Bandleitung BL einstellen.

Werden in der Beschichtungsvorrichtung BV die innenliegenden Lichtwellenleiter der Bändchenstruktur geringeren Reibungskräften als die äußeren beiden Lichtwellenleiter LW1, LWn ausgesetzt, so werden die innenliegenden Lichtwellenleiter LW2 mit LWn-1 weniger als die äußeren Lichtwellenleiter LW1, LWn gedehnt. Die innenliegenden Lichtwellenleiter LW2 mit LWn-1 werden dann gegenüber den äußeren Lichtwellenleitern LW, LWn automatisch straffer, d.h. gespannter der Beschichtungsvorrichtung BV zugeführt, da ja alle Lichtwellenleiter LW1 mit LWn mit etwa derselben Vorwärtstransportgeschwindigkeit durch die gemeinsame Abzugseinrichtung GAZ der Beschichtungsvorrichtung BV zugeführt werden. Dadurch ist weitgehend sichergestellt, dass die ursprünglich eingestellte relative Verteilung der Längszugspannungen der Lichtwellenleiter auch in der fertigen Bandleitung BL weitgehend erhalten bleibt. Denn die Gruppe von Lichtwellenleitern LW1 mit LWn wird durch die gemeinsame Abzugseinrichtung GAZ als Gruppe hinsichtlich ihres Spannungszustandes gewissermaßen "konserviert" in die Beschichtungsvorrichtung BV hineingeschoben.

Mit Hilfe der Herstellungslinie von Figur 1 kann beispielsweise ein sogenanntes 12-Faserbändchen hergestellt werden, bei dem alle zwölf Lichtwellenleiter im gestreckten, geradlinig ausgelegten Bändchen weder Zug- noch Druckspannungen aufweisen. Dazu wird für alle Lichtwellenleiter im wesentlichen dieselbe Faserspannung von etwa 70 cN voreingestellt. Wird die gemeinsame Bändchenumhüllung BS mit Hilfe einer Beschichtungsvorrichtung insbesondere entsprechend dem Prinzip der EP 0 582 944 A1 umhüllt, so werden aufgrund der unterschiedlichen Schleppströmungskräfte in der Beschichtungsvorrichtung auf die äußeren Randfasern der Bändchenstruktur größere Reibungskräfte ausgeübt als auf die innenliegenden Lichtwellenleiter. Aufgrund der gemeinsamen, d.h. einheitlichen Vorwärtstransportbewegung der gesamten Gruppe von Lichtwellenleitern mittels der gemeinsamen Abzugseinrichtung GAZ wird automatisch ein Ausgleich der durch das Bändchen-Werkzeug unterschiedlich ausgeübten Bremskräfte vorgenommen. Die äußeren Randfasern LW1, LW12 weisen also auf ihrem Laufweg von der gemeinsamen Abzugseinrichtung GAZ in die Beschichtungsvorrichtung BV hinein eine geringere Faserspannung als die innenliegenden Lichtwellenleiter auf. Nach dem Bändchenwerkzeug weisen dann durch diese selbsttätige Regulierung der Faserspannungen im Zwischenraum zwischen der gemeinsamen Abzugseinrichtung GAZ und der Beschichtungsvorrichtung BV die Lichtwellenleiter in der fertigen Bandleitung BL im wesentlichen jeweils wiederum dieselbe Faserspannung auf. Dies veranschaulicht die Tabelle 1 beispielhaft für ein Zwölf-Faser-Bändchen anhand von gemessenen Faserspannungen vor der gemeinsamen Abzugseinrichtung GAZ, im Zwischenraum zwischen der Abzugseinrichtung GAZ und der Beschichtungvorrichtung BV und in der Bandleitung BL nach deren Fertigstellung.

**Tabelle 1:**

| Fasernummer (im Bändchen BL mit n=1-12) | 1 | 2 | 3 | 4 | 5 | 6 | 7 | 8 | 9 | 10 | 11 | 12 |
|---|---|---|---|---|---|---|---|---|---|---|---|---|
| Faserspannung vor dem gemeinsamen Abzug GAZ in cN | 70 | 70 | 70 | 70 | 70 | 70 | 70 | 70 | 70 | 70 | 70 | 70 |
| Bremskraft auf die Fasern in der Beschichtungs-vorrichtung BV | 150 | 90 | 60 | 60 | 60 | 60 | 60 | 60 | 60 | 60 | 90 | 150 |
| Faserspannung des jeweiligen Lichtwellenleiters zwischen dem Abzug GAZ und dem Bändchenwerkzeug BV | 20 | 80 | 110 | 110 | 110 | 110 | 110 | 110 | 110 | 110 | 80 | 20 |
| Faserspannung nach dem Bändchenwerkzeug BV | 170 | 170 | 170 | 170 | 170 | 170 | 170 | 170 | 170 | 170 | 170 | 170 |

Allen Lichtwellenleitern LW1 mit LWn, n=12 wurde dieselbe Vorspannung von etwa 70 cN mit Hilfe der Einstellmittel TE1 mit Ten, n=12 vorab aufgeprägt. Der gemeinsame Faserabzug GAZ wird zweckmäßigerweise so geregelt, dass nach diesem Abzug jeder Lichtwellenleiter mit einer endlichen Zugspannung beaufschlagt wird und nicht etwa in Form von losen Schlingen unzulässig stark durchhängt. Im vorliegenden Beispiel der Tabelle 1 beträgt die Summen-Faserspannung ungefähr 1080 cN = 10,8 N. Wie aus der Tabelle 1 ersichtlich ist, ergibt sich für jeden Lichtwellenleiter im fertigen Lichtwellenleiter-Bändchen BL jeweils eine Faserspannung, die um eine Konstante, hier um etwa 100 cN gegenüber der ursprünglich voreingestellten Faserspannung von etwa 70 cN erhöht ist. Relativ zueinander weisen somit alle Lichtwellenleiter im fertigen Bändchen im wesentlichen wiederum dieselben, konstanten Faserspannungsunterschiede von etwa 0 N auf, was gewünscht ist. Allgemein ausgedrückt entsprechen die sich im fertigen Bändchen einstellenden Spannungsverhältnisse je zweier benachbarter Lichtwellenleiter relativ zueinander im wesentlichen dem vorab, d.h. vor der gemeinsamen Abzugseinrichtung eingestellten Verhältnis der Vorspannungen dieser benachbarten Lichtwellenleiter.

Das erfindungsgemäße Verfahren kann in vorteilhafter Weise nicht nur bei der Herstellung von Lichtwellenleiter-Bändchen, sondern auch bei der Herstellung von sonstigen Lichtwellenleiter-Strukturen herangezogen werden. Insbesondere kann sie auch für die Herstellung eines optischen Übertragungselements im Form einer Bündelader verwendet werden. Eine solche Lichtwellenleiter-Bündelader ist in der Figur 2 schematisch im Querschnitt dargestellt. Sie ist mit BA bezeichnet. Sie enthält in einem kreiszylinderförmigen Kunststoffröhrchen AM eine Vielzahl von einzelnen Lichtwellenleitern oder Lichtleitfasern LW11 mit LW1n, die dort zu einem Bündel zusammengefasst sind oder lose eingebracht sind. Vorzugsweise ist das Innere des Kunststoffröhrchens AM mit einer üblichen Kabelfüllmasse FM angefüllt, um gewisse Ausgleichsbewegungen, die Längswasserdichtigkeit des Kunststoffröhrchens AM sowie eine mechanische Abpolsterung der einzelnen Lichtwellenleiter LW11 mit LW1n weitgehend sicherstellen zu können.

Zusammenfassend betrachtet stellt sich in der Praxis oftmals das Problem, in Lichtwellenleiter-Elementen wie z. B. Faserbändchen, Bündeladern, Kabelseelen die Längen und/oder Spannungszustände der einzelnen otpischen Fasern definiert und in manchen Fällen sehr genau einzustellen. In manchen Fällen sollen alle Fasern eines Elementes insbesondere gleich lang sein. In anderen Fällen sind Elemente herzustellen, bei denen unterschiedliche Faserlängen oder unterschiedliche Faserspannungen innerhalb eines Elementes gebraucht werden.

Gemäß der Offenlegungsschrift DE 195 06 008 A1 werden die Fasern über eine gemeinsame Umlenkrolle geführt und nach dieser Umlenkrolle bei Bedarf zusätzlich gebremst. Eine Voreinstellung vor der gemeinsamen Umlenkrolle wird nicht vorgenommen.

Bei dem erfindungsgemäßen Verfahren werden die optischen Fasern für ein optisches Übertragungselement bereits in einem vorab definiert gedehnten Zustand einer gemeinsamen Abzugseinrichtung zugeführt. Die Abzugseinrichtung ist so ausgelegt, dass sie alle Fasern mit der gleichen Geschwindigkeit (und damit schlupffrei) transportiert. Die Vordehnung der Fasern kann z.B. durch individuelle Abbremsung der Fasern eingestellt werden. 9N Faserspannung entspricht bei den in der Praxis verwendeten Lichtwellenleitern ca. 1 % Faserdehnung. Werden in einem optischen Übertragungselement gleiche Längen für die Einzelfasern benötigt, so wird das insbesondere dadurch erreicht, dass alle Fasern für dieses Element mit der gleichen Zugspannung beaufschlagt und der schlupffrei transportierenden Abzugsrichtung zugeführt werden. Von dieser Abzugsvorrichtung werden die Fasern direkt dem Folgeprozess (z.B. Bändchenwerkzeug) zugeführt. Die für alle Fasern geleichmäßige Länge im Übertragungselement wird auch dann gewährleistet, wenn im o.g. Folgeprozess die Fasern unterschiedlich gebremst werden. Entsprechend dieser unterschiedlichen Abbremsung im Folgeprozess stellen sich automatisch Spannungsunterschiede zwischen den einzelnen Fasern im Bereich zwischen der Abzugseinrichtung und dem Folgeprozess ein, die die unterschiedliche Abbremsung im Folgeprozess kompensieren. Werden in einem Übertragungselement unterschiedliche Faserlängen gebraucht (wie z.B. bei Bändchen, die später um ein Kernelement verseilt werden), so werden die Fasern vor der gemeinsamen Abzugsvorrichtung unterschiedlich abgebremst. Die Faser eines Bändchens, die gegenüber einer anderen Fasern des selben Bändchens (im entspannten Zustand) in der Praxis um ca. 0,1 % länger sein soll, wird vor der gemeinsamen Abzugsvorrichtung mit einer um ca. 90 cN niedrigeren Spannung abgebremst.

Das besondere dieses erfindungsgemäßen Verfahrens liegt insbesondere im Zusammenwirken der Zugspannungsregelung, des gemeinsamen Faserabzuges und des Folgeprozesses. Der besondere Vorteil dieses Faserdosierverfahrens liegt vorzugsweise darin, dass der Folgeprozess die zugemessenen Faserlängen nicht mehr beeinflusst. Verarbeitungsbedingte Zusatzkräfte werden in vorteilhafter Weise automatisch korrigiert, ohne daß diese durch die Vorspannmittel durch die entsprechende Auswahl der Größe der Vorspannung mit berücksichtigt werden braucht.

Mit Hilfe des erfindungsgemäßen Verfahrens ist es auch möglich, den Lichtwellenleitern unterschiedliche individuelle Längszugspannungen vorab auf ihrem Laufweg von ihren Vorratsspulen zur gemeinsamen Abzugsrichtung aufzuprägen und diese relativen Spannungsunterschiede der einzelnen Lichtwellenleiter zueinander durch das gemeinsame Weiterschieben mittels der gemeinsamen Abzugseinrichtung in die gemeinsame Beschichtungsvorrichtung hinein weitgehend im fertigen optischen Übertragungselement beizubehalten. So kann es beispielsweise zweckmäßig sein, den Lichtwellenleitern eine innerhalb der Bandleitung unterschiedliche Spannungsverteilung derart aufzuprägen, dass diese etwaig wirksam werdenden Zusatzkräfte durch spätere Verseilvorgänge entgegengesetzt gerichtet ist.

## Patentansprüche

1. Verfahren zur Herstellung eines optischen Übertragungselements (BL), bei dem mehrere Lichtwellenleiter (LW1 mit LWn) von Vorratsspulen (VS1 mit VSn) abgezogen und über eine nachfolgende, gemeinsame Abzugseinrichtung (GAZ) einer gemeinsamen Beschichtungsvorrichtung (BV) zugeführt werden, von der sie mit einer gemeinsamen Umhüllung (BS) aus Kunststoffmaterial umschlossen werden,
**dadurch gekennzeichnet,**
dass lediglich vor der gemeinsamen Abzugseinrichtung (GAZ) eine selektive Voreinstellung der Zugspannung (F1 mit Fn) jedes Lichtwellenleiters (LW1 mit LWn) vorgenommen wird,
dass anschließend mit Hilfe der gemeinsamen Abzugseinrichtung (GAZ) diesen selektiv voreingestellten Lichtwellenleitern (LW1 mit LWn) im wesentlichen dieselbe Vorwärtstransportgeschwindigkeit (V1 = V2 =.....= Vn) zugeordnet wird,
und dass die Lichtwellenleiter (LW1 mit LWn) mit dieser selben Vorwärtstransportgeschwindigkeit (V1 = V2 =.....= Vn) der gemeinsamen Beschichtungsvorrichtung (BV) zugeführt werden.

2. Verfahren nach Anspruch 1,
**dadurch gekennzeichnet,**
dass alle Lichtwellenleiter (LW1 mit LWn) am Außenumfang einer gemeinsamen Umlenkrolle (UR) aufgelegt werden, der eine Antriebseinrichtung (RA) unter Bildung der gemeinsamen Abzugseinrichtung (GAZ) zugeordnet ist.

3. Verfahren nach einem der vorhergehenden Ansprüche,
**dadurch gekennzeichnet,**
dass die Lichtwellenleiter (LW1 mit LWn) auf ihrem Laufweg von ihren Vorratsspulen (VS1 mit VSn) zu der gemeinsamen Abzugseinrichtung (GAZ) derart mit Zugspannungen relativ zueinander vorab beaufschlagt werden, daß sich eine Zugspannungsverteilung ergibt, die weitgehend ihrer gewünschten, relativen Zugspannungsverteilung im fertigen optischen Übertragungselement (BL) entspricht.

4. Verfahren nach einem der vorhergehenden Ansprüche,
**dadurch gekennzeichnet,**
dass die Lichtwellenleiter (LW1 mit LWn) auf ihrem Laufweg von ihren Vorratsspulen (VS1 mit VSn) zu der gemeinsamen Abzugseinrichtung (GAZ) mit etwa derselben Zugspannung (F1 = F2 = ....= Fn) vorab beaufschlagt werden.

5. Verfahren nach einem der vorhergehenden Ansprüche,
**dadurch gekennzeichnet,**
dass das optische Übertragungselement als eine Bandleitung (BL) ausgebildet wird.

6. Verfahren nach Anspruch 5,
**dadurch gekennzeichnet,**
dass bei Anwendung einer Schleppströmung im Bereich der Beschichtungsvorrichtung (BV) den Lichtwellenleitern (LW1 mit LWn) vor der gemeinsamen Abzugseinrichtung (GAZ) zur Kompensation von auf die Lichtwellenleiter unterschiedlich wirkenden Schleppströmungskräften im wesentlichen dieselbe Zugspannung (F1 = F2 = ....= Fn) auf ihrem Weg von ihrer jeweiligen Vorratsspule (VS1 mit VSn) zur gemeinsamen Abzugseinrichtung (GAZ) selektiv zugeordnet wird.

7. Verfahren nach Anspruch 6,
**dadurch gekennzeichnet,**
dass die Vorspannung des jeweiligen Lichtwellenleiters (LW1 mit LWn) durch eine als Tänzer ausgebildete Spanneinrichtung (TE1 mit TEn) aufgebracht wird.

8. Verfahren nach einem der vorhergehenden Ansprüche,
**dadurch gekennzeichnet,**
dass der gemeinsamen Beschichtungsvorrichtung (BV) eine zweite Abzugseinrichtung (RPA) nachgeordnet ist, mit der das fertige, optische Übertragungselement (EL) aus der Beschichtungsvorrichtung (BV) heraustransportiert wird.

9. Verfahren nach einem der vorhergehenden Ansprüche,
**dadurch gekennzeichnet,**
dass das optische Übertragungselement als eine Lichtwellenleiter (LW11 mit LW1n) lose in einer Schutzhülle (AM) enthaltende Struktur ausgebildet wird.

10. Einrichtung zur Durchführung des Verfahrens nach einem der vorhergehenden Ansprüche,
**dadurch gekennzeichnet,**
dass lediglich vor der gemeinsamen Abzugseinrichtung (GAZ) getrennte Einstellmittel (TE1 mit TEn) vorgesehen sind, mit deren Hilfe die Zugspannungen (F1 mit Fn) der Lichtwellenleiter (LW1 mit LWn) selektiv einstellbar sind, bevor diese in die gemeinsame Abzugseinrichtung (GAZ) einlaufen, und dass die gemeinsame Abzugseinrichtung (GAZ) derart ausgebildet ist, dass die selektiv voreingestellten Lichtwellenleiter (LW1 mit LWn) im wesentlichen mit derselben Vorwärtstransportgeschwindigkeit (V1 = V2 = ...= Vn) der nachfolgenden, gemeinsamen Beschichtungsvorrichtung (BV) zuführbar sind.
